# EUROPEAN PATENT APPLICATION

(11) **EP 2 657 893 A1**
(43) Date of publication of application: **30.10.2013**
(21) Application number: 12368012.6
(22) Date of filing: 26.04.2012
(51) Int. Cl.: G06Q 10/06, G06Q 10/04

(54) **System and method of categorizing and ranking travel option search results**

(71) Applicant: Amadeus S.A.S., 06410 Biot (FR)
(72) Inventor: VIGUIE Luc, 06000 NICE (FR); PATOUREAUX Marc, 06130 GRASSE (FR); GIBERGUES Sébastien, 06410 BIOT (FR); ISNARDON Bénédicte, 06400 CANNES (FR)
(74) Representative: Cases, Jean-François

(57) **Abstract**

The patent relates to a method of providing travel option search results. This method is characterized by retrieving a plurality of travel options from a travel option database based on search terms in a search query, classifying the travel options according to a category, ranking the travel options for each category and providing at least one of the ranked travel options for display to a customer.

## Description

### TECHNICAL FIELD

The present invention generally relates to the sale of travel options, such as airline tickets, and more specifically to systems and methods for identifying specific travel options for presentation by a travel service provider, such as a travel agency, to a customer, as well as corresponding computer program products.

### BACKGROUND

In a highly competitive environment such as online airline ticket sales, travel option searching features can be a factor that distinguishes travel service providers, such as online travel agents or agencies, and causes customers to prefer one travel service provider over another travel service provider. Current fare search results supplied at e-commerce travel websites of travel service providers typically offer every possible travel option to a customer that desires to travel between two locations on a travel date. An online customer is not necessarily an expert in the domain of travel. By offering an excessive number of travel options to the online customer, conventional travel option search engines may overwhelm and/or confuse the customer and thereby hinder selection of an optimum travel option. A prospective customer may have difficulty in establishing personal selection criteria and selecting a travel option from among a multitude of similar travel options in the fare search results. As a result, the customer often merely chooses one of first-presented (e.g., the first five) options, which may not correspond to options that a trained and seasoned travel agent would recommend to the customer in this type of transaction.

This problem of presenting an excessive number of travel options to the online customer may also affect the conversion rate (i.e., the number of purchases divided by the number of views) and the effectiveness of the fare search results. Prospective customers who have difficulty in making a decision may be paralyzed by the excessive number of travel options offered by the travel service provider for their selection in the fare search results, and may delay their purchase as a result. Presenting an excessive number of travel options to the online customer may also negatively impact customer satisfaction with the travel service provider and thereby represent another problem. The degree of satisfaction may depend more on the perception of missed opportunities than on the actual quality of the selected product. A face-to-face travel agent, who plays an advisory role in offline travel booking services, may solve these problems by selecting which travel options to present to the customer. However, this type of expert assistance is absent from e-commerce travel websites because of the cost of providing a live travel agent.

Thus, improved systems and methods of presenting travel options from a travel service provider to a prospective customer are needed that assist in the customer to select a travel option from among a large number of available travel options.

### BRIEF DESCRIPTION OF THE DRAWINGS

The accompanying drawings, which are incorporated in and constitute a part of this specification, illustrate various embodiments of the invention and, together with the general description of the invention given above, and the detailed description of the embodiments given below, serve to explain the embodiments of the invention.

FIG. 1 is a block diagram showing a typical operating environment for a travel option search results selection system.

FIG. 2 is a high level functional diagram of an embodiment of the travel option search results selection system.

FIG. 3 is a flow chart of a featured results selection algorithm that may be executed by the travel option search results selection system.

FIG. 4 is a diagrammatic representation of a web page presentation of the featured results provided by the selection algorithm of FIG. 3.

### DETAILED DESCRIPTION

Embodiments of the invention will typically be implemented by a computerized reservation system (CRS). The CRS may be used to store and retrieve information and conduct on-line transactions related to goods and services, such as the online purchase of tickets for air travel initiated by a customer accessing a travel service provider. In the context of air travel, a CRS is configured to respond to itinerary queries from the travel service provider by identifying particular flights that satisfy a given itinerary, and to make or book reservations. A CRS may be embodied in a global distribution system (GDS), which is a type of CRS that books and sells air travel tickets for multiple airlines. The embodiments of the invention facilitate selecting one or more particular travel options from among a larger number of possible travel options and presenting the particular travel options to a customer submitting an itinerary query through a travel service provider.

Travel service providers, such as travel agents and agencies, may interact with the CRS to search for travel options responsive to a query from a prospective customer. In response to an inquiry embodied in the search request, the CRS may retrieve search results from one or more databases that include travel options which satisfy the search terms in the request. The CRS may then classify the travel options contained in the search results as belonging to one or more categories. For example, a travel option representing a flight itinerary returned by the search might be classified as belonging to a low cost flight category and to a fastest travel option category. One or more travel options from each category may then be selected by sorting based on a ranking, and included in a best travel option subset of that category.

The travel options in these subsets may thus be considered to represent the optimum or best travel options within in that subset's respective travel option category. Each subset may thereby provide one or more travel options within a larger class of travel options that are considered as more desirable to the prospective customer. These selected travel options may then be conveyed to the travel service provider for display to the prospective customer as featured results. The one or more best or optimum option subsets are thus subsets of a larger set of travel options classified by category, which in turn are subsets of a larger set of all possible travel options meeting the search criteria. The travel options comprising these best option subsets are selected by applying logic to classify the travel options according to a category and then to rank the travel options within a category for the presentation of the top N ranked travel options in the category. By limiting the choices displayed to the customer to a subset of all possible travel options, the customer's hesitation to purchase the travel option product or service may be reduced at the product selection time, and the conversion rate thereby increased. The categorization and ranking of travel options thereby mimics recommendations that a trained and seasoned travel agent would make to the customer in the selection of a particular travel option.

To this end, embodiments of the invention are directed to selecting a subset of a larger set of travel options as featured results returned by a database search engine so that customers of a travel service provider are not overwhelmed with excessive choices. These featured results may then be presented by the travel service provider to its customer in a webpage visible on a display along with an invitation to make a particular selection. The processing of search results removes less desirable travel options based upon suitable logic to eliminate less attractive products or options. One approach is to use a single parameter, such as a ticket price, travel time, departure time, or arrival time, for processing of the search results. However, the operation of simple parameters such as these may be too transparent to the customer, and may fail to deliver sufficient perceived value to attract the customer to use the service. By using a combination of categorizing and ranking travel options to be presented to the customer, the operation of a search results selection formula or algorithm may be made less transparent. In addition, selection algorithm performance on future search results may be improved by "auto learning" based on a variety of data associated with past customer behavior stored in databases accessible by the system. To further improve customer confidence in the travel options presented, embodiments may also qualify each proposal with a "credibility stamp" that may provide a tangible source of confidence to the customer.

Embodiments of the search results selection system may include a search engine at the CRS that considers past customer choices when scoring or ranking the relevance of travel option search results. In the specific context of air travel, flight search results may be obtained from publicly and privately negotiated rate databases and then ranked, at least in part, based on previous sales data, booking data, ticketing data, and demand data for similar flights. For example, customers or travel agents who searched for flights between a particular pair of originating and destination locations may have demonstrated selection patterns that provide insight regarding which flights are most likely to be of interest and relevant to a current system user seeking to book a flight. This history of which flights are more likely (i.e., have a relatively high probability) to be selected by a customer requesting a search with a similar set of search parameters may thereby be used to sort the current flight search results and narrow down the number of selections to be presented to the customer. Flights that are historically less likely (i.e., have a relatively low probability) to be selected by a customer may be filtered out of the displayed results to reduce visual clutter and provide the customer with a more manageable set of travel option selections as featured results.

Other parameters may also be utilized by the search results selection system of the CRS in determining which travel options should be presented to the customer by the travel service provider. By way of example, for a given origin, destination, and travel date, the search results selection system may select featured results to display from one or more categories of travel options. These may include displaying the most popular flight itinerary(ies) as the featured results, the overall fastest or shortest duration flight itinerary(ies) as the featured results, flight itinerary(ies) that are part of an exclusive offer which the travel service provider has negotiated with one or more selected airlines as the featured results, the cheapest available flight(s) or travel solution(s) overall as the featured results, the last or most recently booked flight itinerary(ies) across all distributers for the requested travel date, origin, and destination as the featured results, and/or a sponsored flight itinerary(ies) that represents a specific recommendation by the travel service provider as the featured results.

In an alternative embodiment, a qualification flag or sense-of-urgency indicator may be communicated from the CRS to the travel service provider for display to the customer as assistance in their decision making. The sense-of-urgency indicator may be representative of the popularity of one or more of the flight itineraries in the featured results. For example, the CRS may cause an indication of a number of people who have booked a particular flight itinerary to be communicated as a sense-of-urgency indicator to the travel service provider for display to the customer. Alternatively, the CRS may cause a time stamp indicating when the latest ticket was booked for a flight or a similar flight to be communicated as a sense-of-urgency indicator to the travel service provider for display to the customer. Alternatively, the CRS may cause a warning indication of how many seats are currently available for a flight itinerary to be communicated as a sense-of-urgency indicator to the travel service provider for display to the customer. The CRS may also cause multiple sense-of-urgency indicators to be simultaneously returned for display to the customer.

The embodiments of the invention may be an improvement to a low air fare search tool, such as the Amadeus Master Pricer, or any other search tool for use in a fare search enterprise.

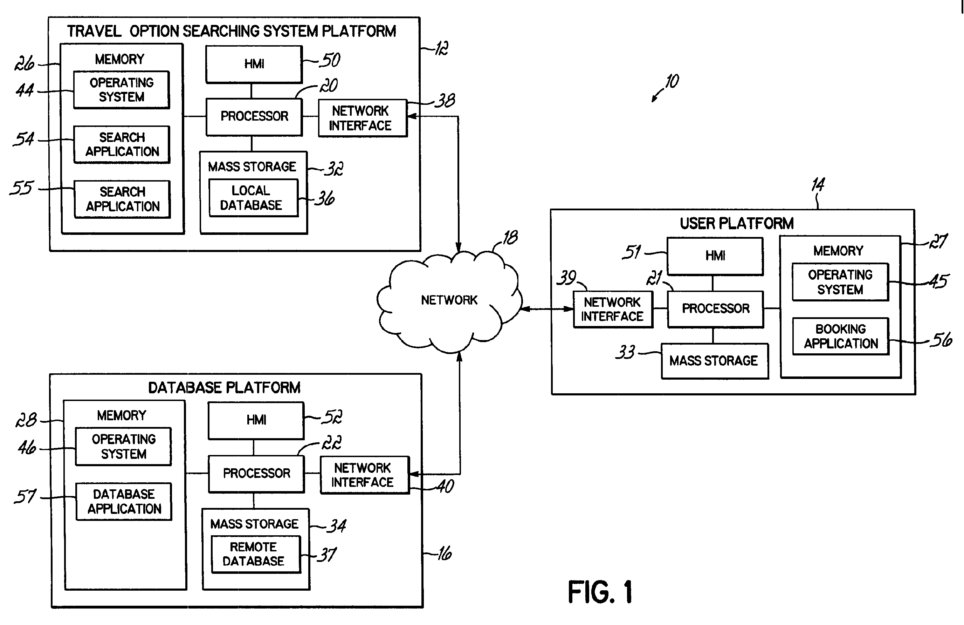

With reference to FIG. 1 and in accordance with an embodiment of the invention, an exemplary operational environment 10 for the search results selection system includes a travel option searching system platform in the form of a CRS 12, a user platform 14, and at least one database platform 16. The hardware platforms 12, 14, 16 are in operative communication with each other via a network 18. Hardware platform 12 may include a processor 20, memory 26, a mass storage device 32, a network interface 38, and a Human-Machine Interface (HMI) 50. Hardware platform 14 may include a processor 21, memory 27, a mass storage device 33, a network interface 39, and a HMI 51. Hardware platform 16 may include a processor 22, memory 28, a mass storage device 34, a network interface 40, and a HMI 52.

Each of the processors 20-22 may include one or more processing circuits selected from microprocessors, micro-controllers, digital signal processors, microcomputers, central processing units, field programmable gate arrays, programmable logic devices, state machines, logic circuits, analog circuits, digital circuits, and/or any other devices that manipulate signals (analog and/or digital) based on operational instructions that are stored in the associated platform memory 26-28. Each of the memories 26-28 may comprise a single memory device or a plurality of memory devices including, but not limited to, read-only memory (ROM), random access memory (RAM), volatile memory, non-volatile memory, static random access memory (SRAM), dynamic random access memory (DRAM), flash memory, cache memory, and/or any other device capable of storing digital information. Each of the mass storage devices 32-34 may comprise a single mass storage device or a plurality of mass storage devices including, but not limited to, hard drives, optical drives, tape drives, non-volatile solid state devices and/or any other device capable of storing data, such as a database structure 36, 37.

Network interfaces 38-40 may employ one or more suitable communication protocols for communicating over the network 18, such as User Datagram Protocol/Internet Protocol (UDP/IP), and/or Transmission Control Protocol/Internet Protocol (TCP/IP). The network interfaces 38-40 may connect to the network 18 via a hardwired link, such as an IEEE 802.3 (Ethernet) link, a wireless link using a wireless network protocol, such as an 802.11 (Wi-Fi) link, or any other suitable link that allows the hardware platform 12, 14, 16 to interface with the network 18. Network 18 may include a plurality of interconnected networks, such as one or more Local Access Networks (LANs), Wide Access Networks (WANs), and/or public networks, such as the Internet. The Internet is a global system of interconnected computer networks. The World Wide Web is a system of interlinked hypertext documents accessed via the Internet and, more specifically, is a collection of text documents and other resources, linked by hyperlinks and uniform resource locators (URLs), usually accessed by web browsers from web servers. With a web browser, the user/customer can view web pages generated by the CRS, which may be an application hosted on hardware platform 14, that may contain text, images, videos, and other multimedia, and navigate between them via hyperlinks.

Each of the processors 20-22 may operate under the control of a respective operating system 44-46, which may reside in the corresponding memory 26-28 of the respective platform 14, 16, 18. The operating system 44-46 may manage the computer resources of respective platform 14, 16, 18 so that computer program code embodied as one or more computer software applications 54-57 residing in memory 26-28 may have instructions executed by the processor 20-22. An HMI 50-52 may be operatively coupled to the processor 20-22 of the respective hardware platform 12, 14, 16 in a known manner. The HMI 50-52 may include output devices, such as alphanumeric displays, a touch screen, and other visual indicators, and input devices and controls, such as an alphanumeric keyboard, a pointing device, keypads, pushbuttons, control knobs, etc., capable of accepting commands or input from an operator and transmitting the entered input to the processor 20-22.

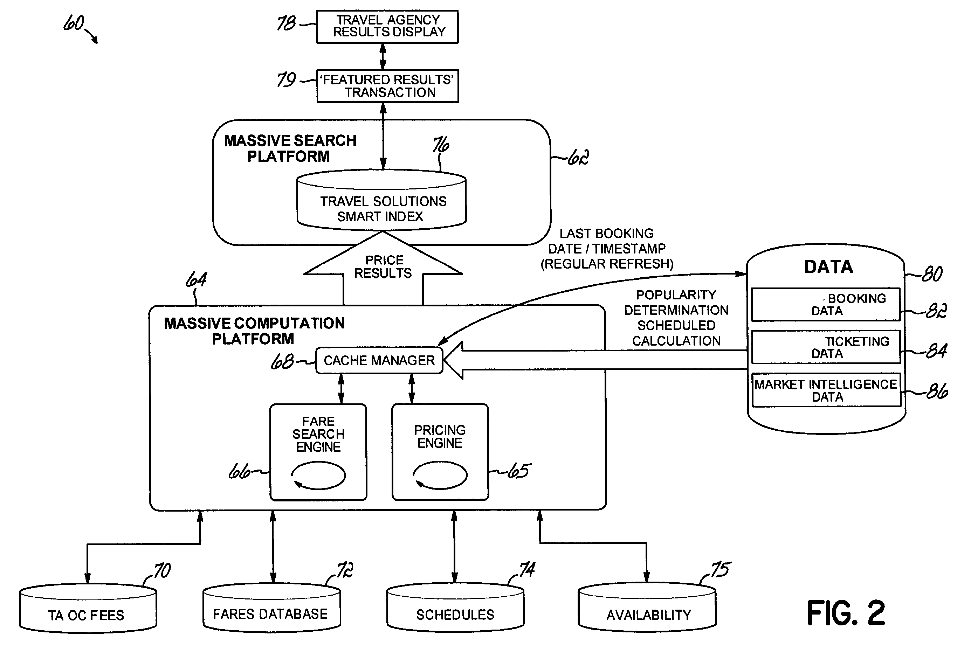

With reference to FIG. 2, a travel option searching system (TOSS) 60 for the CRS 14 includes a Massive Search Platform (MSP) 62, and a Massive Computation Platform (MCP) 64. The functions shown in FIG. 2 that comprise the TOSS 60 may be provided by one or more search applications 54, 55 hosted by the TOSS platform 12, and/or may be provided by applications running on separate hardware platforms connected through a network or other communication medium. The MCP 64 includes a cache manager module 68, a pricing engine plug-in 65, and a fair search engine plug-in 66. The cache manager module 68 manages database searches and plug-ins 65, 66, and provides search results to the MSP 62.

The plug-ins 65, 66 are designed to support computation of numerous prices within a defined time frame, which the MCP 64 provides to the MSP 62. The MCP 64 may thereby offer full scalability that allows the MSP 62 to access an arbitrarily large amount of data and/or perform an arbitrarily large number of price calculations. The fair search engine plug-in 66 may run continuously so that the lowest fare travel options are constantly updated by the MCP 64 and refreshed in the MSP 62. The travel option data in the MSP 62 may thereby reflect real-time or near real-time fare pricing. For search requests including a unique itinerary requiring data that has not been recently updated among the lowest fare travel options, the pricing engine plug-in 65 may compute a unique price for the unique itinerary upon request of the cache manager 68. The uniquely priced itinerary may then be provided to the MSP 62 by the cache manager module 68.

Both the pricing engine plug-in 65 and the fair search engine plug-in 66 may be in operative communication with one or more databases that contain data relating to airline flights, such as a Travel Agency Originating Commission (TAOC) fee database 70, a flight fares database 72, a flight schedules database 74, and a flight availability database 75. The TAOC fee database 70 may include information regarding ancillary services filled by an online travel agency having a pre-existing relationship with the TOSS operator. The fares database 72 may include published and negotiated fares, e.g., published airline fares and fares negotiated by a travel agency. Similarly, the schedules database 74 may include airline flight schedules, and the flight availability database may include information regarding the availability of flights and/or open seats on the flights. Each of the databases 70, 72, 74, 75 may include a database containing proprietary data that is accessible within the TOSS 60, but that is not reachable from outside the system 60. Each of the databases 70, 72, 74, 75 may also include data available from publically accessible databases. Two or more of the databases 70, 72, 74, 75 may be combined into a single database, such as the schedules database 74 and the flight availability database 75.

To retrieve travel option data, one or more of the fare search engine plug-in 66 (which typically processes numerous itineraries at once) and/or pricing engine 65 (which typically processes a single itinerary at a time) queries the databases 70, 72, 74, 75, performs a low fare search process and delivers the search results. Those results are then sent to the MSP 62. In an embodiment of the invention, the MCP plug-ins 65, 66 return results that include price, availability, and schedule data for flights matching the search terms in the search request. Typical search terms may include various different itineraries (e.g., origin/destination locations and dates for travel).

To facilitate determining the popularity of a travel option, last booking date, and/or last timestamp indexing functions, the cache manager 68 may be in operative communication with a Last Booking Date/Timestamp (LBDT) database 80. The LBDT database 80 may maintain, and/or have access to, one or more proprietary databases containing historical data relating to the travel options booked by system users. In the exemplary embodiment shown in FIG. 2, the LBDT database 80 includes a booking information database 82, a proprietary ticketing database 84, and a market intelligence database 86. The booking information database 82 may include all Passenger Name Record (PNR) data for travel bookings performed by users via the TOSS 60. The proprietary ticketing information database 84 may include data relating to all tickets sold via the travel booking system. The data in the proprietary booking information and ticketing information databases 82, 84 may be data captured by the TOSS 60 as tickets are booked. This data may therefore be data that is not directly available to systems outside the TOSS 60. The market intelligence information database 86 may include an inventory of all globally accessible PNR databases, which may be operated, for example, by travel agencies, airlines, and/or other travel booking systems.

The MSP 62 includes a Travel Solutions Smart Index (TSSI) 76 that indexes and/or categorizes search results obtained from the databases 70, 72, 74, 75, 80 according to one or more formulas, algorithms, rules, and/or criteria. Search results may be provided to the TSSI 76 by the cache manager 68, which manages the search results returned by the pricing engine and fare search engine plug-ins 65, 66. The cache manager 68 regularly refreshes data in the MSP 62 from the LBDT database 80 so that as booking, ticketing, and market intelligence data is updated, the data in the TSSI 76 is kept current in real-time or near real-time. The categorized search results may be further sorted or ranked by the TSSI 76 using a ranking- such as historical travel booking data obtained from one or more databases or sub-databases - to facilitate limiting displayed results to a manageable number. For example, the TSSI 76 may sort the results for a particular search based on a selected ranking parameter. A featured results transaction 79 may use this indexing or ranking to display to one or more selected results in each of one or more categories, with the selected results representing the "best" choices available for a given primary search category. The rankings may be re-calculated and/or refreshed at regular intervals so that search results are ranked according to the latest booking and ticketing data available. By providing a local database within the TOSS 60 that hosts and indexes search result data, the TSSI 76 may provide end users with faster response times to search requests. The perceived performance of the system may thereby be improved as compared to systems that must retrieve travel option information from external databases each time a search request is submitted by a system user.

Travel service providers may interact with the TSSI 76 through a website to search for travel options in response to an inquiry from a customer. Generally, a website is a collection of interconnected web pages that are typically located on a common server, and prepared and maintained as a collection of information. In response to a query from a travel service provider, a featured result transaction may be provided to a display function 78, which in turn provides the featured results in a readable format on a display to the requesting entity. The requesting entity may be a travel agency website, the travel option booking application 56, or any other application that a system user or customer might use to search for and book travel options. The display function 78 may also provide an Application Programming Interface (API) that is used as an interface to the TOSS 60 by external resources or applications, such as the travel option booking application 56, a web server application (not shown), or any other suitable application.

In developing search results selection, indexing, and/or ranking formulas, all possible sources and types of data may be considered in the preliminary analysis of historical travel option selection data. Based on this analysis, travel option characteristics may be selected based on their effect on, or correlation to, customer selections. Travel option data analyzed may include, but is not limited to, ticket price, travel time, airline, and the number of times that the travel option has been booked, to name but a few parameters. By way of example, the number of times that a travel option has been booked in the past may be used to define a category of travel option classification, as well as to rank search results within this category or another different category. The system may then define all possible criteria that could distinguish the booked option or options from other alternative travel options that were not booked or that were booked at a lower selection rate. For example, flight booking rates may be correlated to flight duration, departure time, return time, number of stops, total price, airline, originating airport, destination airport, departure day of the week, return day of the week, departure date, return date, etc. Each one of these travel option characteristics may be combined to determine a composite value that correlates to the frequency with which the corresponding travel option is selected. This value, in turn, may be one of several used to select the featured results of a travel option search.

The categories used to distinguish booked travel options are not limited to any of the aforementioned lists, and may include any criterion that characterizes a travel option. The system may analyze the data set, and select relevant categories based on the analysis. This analysis may take into consideration the different dimensions of the data set, and balance the rating depending on the amount of data available for each data point. If there is not enough data for a given data point, the process may abstract or interpolate the variable until the variable is represented by a significant amount of data. The selected categories may be applied to search results to determine which results to present to a system user as the featured results. Influencing category combinations may also be grouped to provide diversity in the proposed travel option selections provided to the system user.

To this end, the categories used by the TSSI 76 to classify the search results from the MCP 64 may include, but are not limited to, the following categories:

Fastest - The TSSI 76 may process the search results from the MCP 64 to identify a limited specified number of travel options having the shortest elapsed times from origin location to final destination location for the requested dates as a set of featured results to be included in the featured results transaction 79. Alternatively, the TSSI 76 may identify the travel option having the shortest elapsed time from origin location to final destination location for the requested dates, which may be displayed as a single featured result. As a numerical example, the limited specified number of travel options in the set of featured results may be the ten (10) fastest travel options. The elapsed time may include both flight time for an itinerary and the ground time between any connections in the itinerary. The set of featured results may be sorted for display strictly using the classification of the category (i.e., from fastest travel option to slowest travel option). Alternatively, a ranking, such as travel option cost, may be used to sort the featured results from cheapest to most costly for display. For example, the ten (10) fastest travel options in a set of featured results may be ranked for display from the cheapest travel option to the most costly travel option.

Popular - The TSSI 76 may process the search results from the MCP 64 to identify a limited specified number of travel options that are, as examples, most frequently booked or most frequently ticketed, i.e., the most popular travel options, as a set of featured results to be included in the featured results transaction 79. Alternatively, the TSSI 76 may identify the single travel option that is most frequently booked or most frequently ticketed, which may be displayed as a single featured result. This category may employ different levels of granularity for the compiled booking and ticketing data, such as tickets booked or ticketed worldwide, tickets booked or ticketed only within a predefined market, or tickets booked or ticketed only at a point of sale. These subcategories of popularity may also be combined to produce a composite popularity rating. The set of featured results may be sorted for display strictly using the classification provided by the category (i.e., from most popular travel option to least popular option), or in combination with another parameter, such as traveler-desired route, carrier, schedule, and/or cost, to qualify the featured results for display.

Exclusive - The TSSI 76 may process the search results from the MCP 64 to identify a limited specified number of travel options that include ancillary services negotiated with one or several airlines by an affiliated travel agency as a set of featured results to be included in the featured results transaction 79. Alternatively, the TSSI 76 may identify a single travel option that includes a negotiated ancillary service, which may be displayed as a single featured result. Exemplary ancillary services may include any additional service that is exclusive to the traveler such as, for example, complementary lounge access, upgraded meals, and/or seat upgrades. The affiliated travel agency may be one or more selected travel agencies that are provided access to the TOSS 60. The featured results in this category may be ordered for display based on the lowest cost recommendation matching the airline's fare attached to these ancillary services - i.e., based on total cost of the travel option and/or on the cost of the associated air fare alone.

Cheapest - The TSSI 76 may process the search results from the MCP 64 to identify a limited specified number of cheapest travel options (e.g., the 10 cheapest travel options) among published fares and private fares negotiated between one or more airlines and participating travel agencies to be included in the featured results transaction 79. Alternatively, the featured results transaction 79 may be populated with the single cheapest travel option, which may be displayed to the user as a single featured result. In case of multiple fares that are priced equally, the options may be ordered for display based upon popularity, such as described with respect to the "Popular" category described above.

Last Booked - The TSSI 76 may process the search results from the MCP 64 to identify a limited specified number of travel options that were most recently booked across all distributors (e.g., the 10 most recently booked travel options) in the featured results transaction 79. Alternatively, the TSSI 76 may identify the single most recent (e.g., latest) travel option that was booked, which may be displayed as a single featured result. If the specific customer has booked a trip having the same or similar characteristics in the past - e.g., between the same originating and destination locations - the "last booked" option may also display flight options last chosen by the specific customer or may be biased by the specific customer's past identical or similar bookings.

Sponsored - The TSSI 76 may process the search results from the MCP 64 to identify a limited specified number of travel options (e.g., 10 travel options) selected by a sponsoring entity, such as a travel agency, to include in the featured results transaction 79. Alternatively, the TSSI 76 may identify a single sponsored travel option, which may be displayed as a single featured result. These travel options may include a particular routing, carrier, or fare, and may be based on a negotiated deal between the sponsoring entity and the travel option provider, such as, for example, a higher commission paid from an airline to a travel agency.

In an embodiment of the invention, each category of search results may be ranked according to popularity ranking. That is, a subset of a category of search, such as specific number N of top ranked results within the category, are sorted according to a ranking, such as popularity. A top result or several top results from this ranked subset may then be displayed to the customer as featured results. In this way, the number of choices presented to the customer may be limited to a manageable number. This restriction may reduce anxiety in the customer caused by an overwhelming number of choices, and thereby facilitate quicker, less stressful decision making. In addition to the number of past customers who have booked a particular flight, the LBDT database 80 may also include information regarding the time the last ticket for a particular itinerary was booked, the number of remaining seats for a particular ticketing option, and popularity related to a specific criteria, such as the number of travelers who booked a ticket or were ticketed for a certain date, time, price, destination, etc. Featured results may be displayed as a map showing the most popular destinations based on a time of year (e.g., where people are booking flights in March); an originating location (e.g., where are people flying to from Chicago); price (what is the cheapest destination), or any other travel parameter.

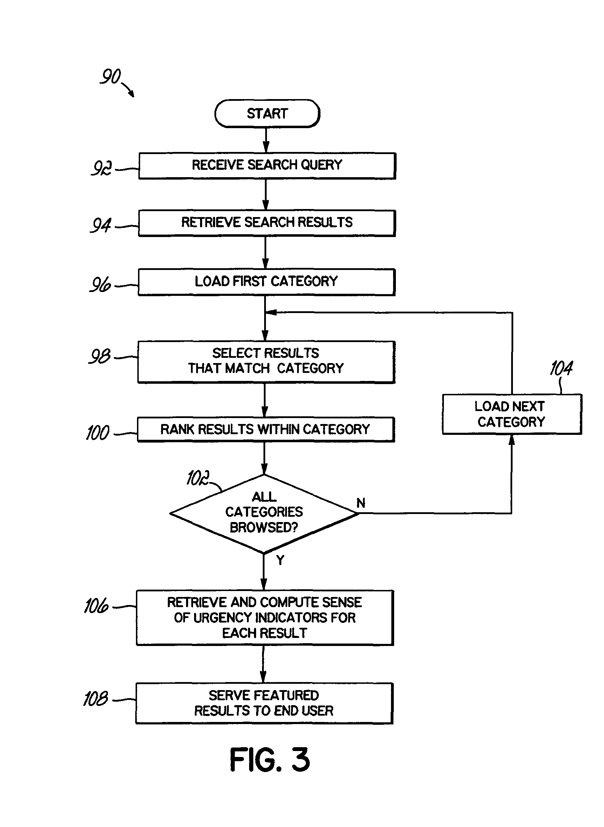

Referring now to FIG. 3, a flow chart 90 illustrates a featured results selection algorithm in accordance with an embodiment of the invention. In block 92, the TOSS 60 receives a search query. The search query will typically originate from an application hosted on the user platform 14, such as the booking application 56. However, the search query may also originate from an application hosted on travel option searching system platform 12, such as a web server application (not shown), or an application on some other suitable platform that has been provided access to the TOSS 60, such as a third party ticket reservation system. For example, the search query may be issued by an application running on a travel agency web server or travel option booking system in response to a customer requesting travel options between an origination location and a destination location on a desired travel date.

In block 94, the TOSS 60 retrieves search results from the TSSI 76 database. In cases where the search query includes terms that do not match travel options indexed in the TSSI 76, the TOSS 60 may search additional databases 70, 72, 74, 75, 80 via the MCP 64 and provide updated data to the TSSI 76. These search results may include all travel options that satisfy the search parameters, and may number in the thousands. The search results may be indexed by the TSSI 76 into categories as described above.

In block 96, the TOSS 60 loads a first category. The first category may be classified by one of the categories discussed above, such as the travel options having the lowest elapsed times, popularity, the presence of exclusive offers, cost, last booked, and/or sponsorship. In block 98, the TOSS 60 selects search results that match the loaded category and proceeds to block 100. In block 100, the selected search results are ranked or sorted within the category based on a ranking. The ranking may be, for example, based on the popularity of the preselected search results, which may be determined by the TSSI 76 as discussed previously. The ranking may also be based on correlations between the parameters of the travel option and the frequency with which the corresponding travel option has historically been booked or ticketed. The correlated combinations may be based strictly on correlations between booking rates and the travel option parameters. To provide a set of featured results, a predetermined number N of the top ranked results within the category are selected for presentation to the search query requester. This predetermined number is typically less than the total number of results within the category and may be a single top result.

In block 102, the TOSS 60 determines if all the categories of search results have been browsed. If not ("NO" branch of decision block 102), the TOSS 60 proceeds to block 104 and loads the next category of search results. The TOSS 60 then returns to block 98 to repeat the featured result selection process using the newly loaded category. If all the search result categories have been browsed for featured results ("YES" branch of decision block 103), the TOSS 60 proceeds to block 106. In block 106, the travel options selected for presentation to the requesting party are retrieved and urgency indicators computed for each featured result or group of results within a category. The TOSS 60 then proceeds to block 108, where the featured results are provided to the requesting party via the display function 78.

The search result selection process may thereby apply one or more formulas to a given search request, with each formula corresponding to a particular category, by matching the search parameters to each formula's data set dimensions. The search result selection process may then rank the list of results produced by each formula and determine the top N results with the category. Each formula may correspond to a qualification category, and each proposed result may be qualified accordingly.

Each category may be associated with a qualification flag that can be returned together with the result. Other sense-of-urgency flags might be also returned with each featured result. Result formulas may have both qualitative and quantitative flags. In the case of a qualitative formula, a qualification flag may be fixed to identify a particular qualitative criterion associated with the formula. For example, the flag may identify the formula's category as being the cheapest or fastest available travel option. In the case of a quantitative formula, the qualification flag may include a numerical parameter. For example, the qualification flag may be based upon the last booking time, such as the travel option was last booked X minutes ago, as an urgency feature associated with one or more of the travel options in the featured results. As another example, the qualification flag may be based upon the frequency with which each travel option in the feature results has been booked in the past, and supplied with the featured results as an urgency feature. As yet another example, the qualification flag may indicate the number of seats remaining in inventory for each travel option in the feature results as an urgency feature supplied with the featured results. A given result may also belong to multiple categories. For example, a specific flight may be both the cheapest and fastest travel option for a desired origination and destination pair, in which case the flight would be indexed as belonging in both categories. The search result qualification process may flag each result and lookup the numerical value in case of quantitative result, and the response may include a results selection including the respective qualification flags.

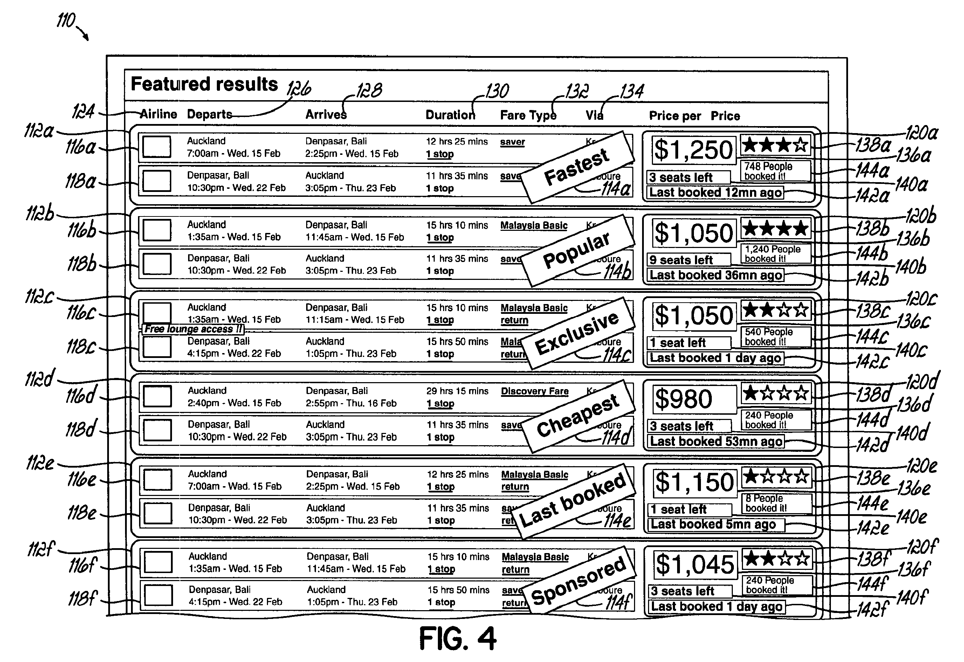

Referring now to FIG. 4, an exemplary featured results page 110, such as may be displayed by a browser application, provides the featured results in travel option search result category windows 112a-112f. Although the search results page 110 as illustrated in FIG. 4 includes six search result category windows 112a-112f, embodiments of the invention may include any number of category windows, and the invention is not limited to a particular number of category windows. The number of featured results displayed in each category is also not limited to any particular number, and may be, for example, a single featured result. By way of another example of how featured results may be displayed, in response to a user selecting or hovering over a particular category, the system may expand the category window 112a-112f to show additional featured results for that category. Thus, persons having ordinary skill in the art will understand that the featured results page illustrated in FIG. 4 represents only one exemplary way to display featured results, and embodiments of the invention are not limited to the display configuration shown.

Each category window 112a-112f may include a category identifier flag 114a-114f that identifies the search results classification, one or more featured travel option segment windows 116a-116f, 118a-118f, and a price/availability information window 120a-120f. As shown in FIG. 4, the category windows 112a-112f include a travel option that includes a departure segment 116a-116f and a return segment 118a-118f, although other numbers of travel options and/or segments may be displayed within the category windows 112a-112f. For example, embodiments of the invention may display a travel option for a one-way trip having one or more segments, or multiple travel options each having one or more segments.

The featured travel option segment windows 116a-116f, 118a-118f include information regarding the corresponding travel option, such as airline carrier 124, departing location 126, arriving location 128, duration 130, fare type 132, and planned layover locations 134.

Each price/availability information window 120a-120f may include a travel option price 136a-136f, a star ranking 138a-138f that is based on customer feedback regarding the travel option, and one or more urgency features. The urgency features may include a flag indicating the number of seats available 140a-140f, a flag indicating the time the last seat was booked 142a-142f, and/or a flag indicating how many people have booked the travel option 144a-144f.

In operation, a customer who wishes to search for and/or book a flight may log into a travel agency website using a web browser in a known manner. The travel agency website may be hosted by the user platform 14, which may include one or more applications, such as the booking application 56 and/or a web server application (not shown). The customer may enter in desired originating and destination locations and travel times via the web browser. The booking application 56 may receive the entered information and issue a search request to the TOSS 60 based thereon. In an alternative embodiment of the invention, the customer may log into a web server application or booking application hosted by the TOSS platform 12 or another platform owned by the operator of the TOSS 60. In response to receiving the travel option search parameters, the TOSS 60 may search the databases for travel options matching the entered information. The search results may then be ranked as previously described with respect to FIGS. 2 and 3. The TOSS 60 may then provide the featured results to the requesting application in one or more primary search ranking categories. The requesting application may then display the results as featured results page as described with respect to FIG. 4.

As will be appreciated by one skilled in the art, the embodiments of the invention may also be embodied in a computer program product embodied in at least one computer readable storage medium having computer readable program code embodied thereon. The non-transitory computer readable storage medium may be an electronic, magnetic, optical, electromagnetic, infrared, or semiconductor system, apparatus, or device, or any suitable combination thereof, that can contain or store a program for use by or in connection with an instruction execution system, apparatus, or device. Exemplary non-transitory computer readable storage media include, but are not limited to, a hard disk, a floppy disk, a random access memory, a read-only memory, an erasable programmable read-only memory, a flash memory, a portable compact disc read-only memory, an optical storage device, a magnetic storage device, or any suitable combination thereof. Computer program code for carrying out operations for the embodiments of the present invention may be written in one or more object oriented and procedural programming languages.

The methods described herein can be implemented by computer program instructions supplied to the processor of any type of computer to produce a machine with a processor that executes the instructions to implement the functions/acts specified herein. These computer program instructions may also be stored in a computer readable medium that can direct a computer to function in a particular manner. To that end, the computer program instructions may be loaded onto a computer to cause the performance of a series of operational steps and thereby produce a computer implemented process such that the executed instructions provide processes for implementing the functions/acts specified herein.

In addition, program code described herein may be identified based upon the application or software component within which the program code is implemented in a specific embodiment of the invention. However, it should be appreciated that any particular program nomenclature that follows is used merely for convenience, and thus the invention should not be limited to use solely in any specific application identified and/or implied by such nomenclature. It should be further appreciated that the various features, applications, and devices disclosed herein may also be used alone or in any combination. Moreover, given the typically endless number of manners in which computer programs may be organized into routines, procedures, methods, modules, objects, and the like, as well as the various manners in which program functionality may be allocated among various software layers that are resident within a typical computing system (e.g., operating systems, libraries, APIs, applications, applets, etc.), and/or across one or more hardware platforms, it should be appreciated that the invention is not limited to the specific organization and allocation of program functionality described herein.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "composed of", or variants thereof are used in either the detailed description or the claims, such terms are intended to be inclusive in a manner similar to the term "comprising."

While embodiments of the invention have been illustrated by a description of various examples, and while these embodiments have been described in considerable detail, it is not the intention of the applicant to restrict or in any way limit the scope of the appended claims to such detail. Additional advantages and modifications will readily appear to those skilled in the art. The invention in its broader aspects is therefore not limited to the specific details, representative methods, and illustrative examples shown and described. Accordingly, departures may be made from such details without departing from the spirit or scope of applicant's general inventive concept.

## Claims

1. A method comprising:
retrieving a plurality of travel options from a travel option database based on search terms in a search query;
classifying the travel options according to a category;
ranking the travel options; and
providing at least one of the ranked travel options for display to a customer.

2. The method of claim 1, further comprising:
determining a sense-of-urgency indicator for the at least one travel option; and
providing the sense-of-urgency indicator for display in association with the at least one of the ranked travel options.

3. The method of claim 2, wherein the sense-of-urgency indicator comprises a qualitative flag.

4. The method of claim 2, wherein the urgency indicator comprises a quantitative flag including a numerical value.

5. The method of claim 1, wherein the category is an elapsed time for each of the travel options, a popularity of each of the travel options, a presence of an exclusive offer associated with each of the travel options, a cost of each of the travel options, a time at which each of the travel options was most-recently booked, or a sponsorship associated with each of the travel options.

6. The method of claim 1, wherein the travel options are ranked based on the elapsed time for each of the travel options, the popularity of each of the travel options, the cost of each of the travel options, or the time at which each of the travel options was most-recently booked.

7. A computer program product, comprising:
a non-transitory computer readable storage medium; and
program instructions stored on the computer readable storage medium that, when executed by a processor, cause the processor to execute the method of claim 1.

8. A computing device, comprising:
a processor; and
a memory including instructions that, when executed by the processor, cause the computing device to execute the method of claim 1.

9. Systems, methods, and computer program products as substantially described and shown herein.
